# EUROPEAN PATENT SPECIFICATION

(11) **EP 2 944 481 B1**
(45) Date of publication and mention of the grant of the patent: **06.09.2017**
(21) Application number: 14738160.2
(22) Date of filing: 09.01.2014
(51) Int. Cl.: B60C 13/00, B60C 13/04

(54) **PNEUMATIC TIRE**
LUFTREIFEN
PNEUMATIQUE

(30) Priority: 09.01.2013 JP 2013001797
(43) Date of publication of application: 18.11.2015
(73) Proprietor: Bridgestone Corporation, Tokyo 104-8340 (JP)
(72) Inventor: IWABUCHI, Sotaro, Kodaira-shi Tokyo 187-8531 (JP); MIYASAKA, Atsushi, Kodaira-shi Tokyo 187-8531 (JP)
(74) Representative: Oxley, Robin John George
(86) International application number: PCT/JP2014/000061
(87) International publication number: WO 2014/109292

(56) References cited:
- WO-A1-2012/004947
- WO-A1-2012/004947
- WO-A1-2012/032741
- JP-A- H10 193 923
- JP-A- 2000 326 708
- JP-A- 2002 307 914
- JP-A- 2009 067 355
- JP-A- 2012 061 922
- JP-A- 2012 061 970
- JP-A- 2012 254 706

## Description

### TECHNICAL FIELD

The present invention relates to a pneumatic tire.

### BACKGROUND ART

There has been conventionally known a tire on a sidewall portion of which a mark of a manufacturer's name, a brand name or the like is indicated by ridges (refer to PTL 1, for example). Such a tire can have a high appealing effect on customers.

Reference is also made to JP 2012-254706 which discloses a method of irradiating tire side face with light, JP H10-193923 which discloses a tire provided with at least two arc emblems and WO 2012/004947 which describes a pneumatic tire wherein a display part of the tire is hardly stained or scarred.

### CITATION LIST

### Patent Literature

PTL 1: JP2009-067355

### SUMMARY

It is desired in some cases to indicate a plurality of types of marks, e.g. a product name, a manufacturer's name, and the like, on one tire. It is preferable in this regard that these plural types of marks are recognized by a viewer at a glance. Further, each mark should have a relatively large size in order to ensure good visibility thereof. However, there occurs a problem in this regard in that marks having relatively large sizes inevitably increase an area where these marks are disposed, whereby a viewer may not be able to recognize the marks spreading in a relatively large area at a glance.
In short, it is generally difficult to make a viewer well recognize a plurality of marks at a glance, while ensuring good visibility of each of the marks.

The present disclosure aims at effectively solving the aforementioned problem and an object thereof is to provide a pneumatic tire capable of making a viewer well recognize a plurality of marks thereof at a glance, while ensuring good visibility of each of the marks.

Our pneumatic tire comprises in a sidewall portion thereof: a first decorative portion indicating a first mark; a second decorative portion indicating a second mark and provided on the inner side in the tire radial direction of the first decorative portion such that at least a portion in the tire circumferential direction of the second decorative portion overlaps the first decorative portion in the tire radial direction, characterized in that a value of the HSV color system of the second mark of the second decorative portion is higher than the value of the first mark of the first decorative portion, and an area of the second mark of the second decorative portion is smaller than an area of the first mark of the first decorative portion.
The pneumatic tire is capable of making a viewer well recognize a plurality of marks thereof at a glance, while ensuring good visibility of each of the marks.

In our pneumatic tire, a "mark" may be constituted of either one of character, symbol, picture, (geometrical) figure, and pattern or two or more thereof in combination. Further, dimensions of the first mark of the first decorative portion and the like are to be measured in a tire assembled with a prescribed rim and inflated at the normal internal pressure with no load exerted thereon in our pneumatic tire.
In our pneumatic tire, a "prescribed rim" represents a standard (or "approved" or "recommended") rim prescribed for each tire size by an industrial standard which is valid in an area where the tire is manufactured and used, and examples of the industrial standard include: "Year Book" of "THE TIRE AND RIM ASSOCIATION INC.) of the United States; "STANDARDS MANUAL" of "The European Tyre and Rim Technical Organisation) of Europe; and "JATMA YEAR BOOK" of "The Japan Automobile Tyre Manufacturers Association, Inc." of Japan.
"Normal internal pressure" represents internal air pressure prescribed to correspond to the maximum loading capacity of a tire by the industrial standards. "The maximum loading capacity" represents the maximum mass which may be loaded on a tire and is prescribed according to size (ply rating) of the tire by the industrial standards.

Brightness, saturation, and hue are defined by the HSV model in our pneumatic tire, where the value of the HSV color system corresponds to the brightness. Value of the HSV color system is an index representing the degree of brightness of a color. Value of the HSV color system of 100 % represents the brightest color and value of the HSV color system of 0 % represents pitch black in each hue.
Saturation is an index representing the degree of purity of a color in the range of 0 % to 100 %. High saturation represents a pure color and low saturation represents a dull color. Hue is an index indicating the position of a color in spectrum by an angle in the range of 0 degree to 360 degrees. 0 degree represents red and 60, 120, 180, 240, 300 degrees represent yellow, green, cyan, blue, and magenta, respectively.
Brightness, saturation and hue are determined in our pneumatic tire by: first measuring brightness and the like of an object such as a decorative belt to be measured, based on a system other than the HSV color system such as a Lab color space, by using a spectrophotometer (e.g. a spectrophotometer manufactured by Konica Minolta, Inc.); and then converting the values thus measured into those based on the HSV color system by using a required software such as "photoshop®".
In our pneumatic tire, "the largest tire width position" represents the largest width position of a tire in an outer contour imaginary curve, drawn by excluding irrelevant projections such as characters and rim guards, of a sidewall portion in a state where the tire has been assembled with the aforementioned prescribed rim and inflated at the maximum air pressure prescribed by the relevant industrial standard with no load exerted thereon.

According to our pneumatic tire, it is possible to make a viewer well recognize a plurality of marks of the tire at a glance, while ensuring good visibility of each of the marks.

### BRIEF DESCRIPTION OF THE DRAWINGS

In the accompanying drawings, wherein:
FIG. 1 is a cross sectional view in the tire width direction of a half portion of our pneumatic tire, according to one embodiment thereof, in a state where the tire has been assembled with a prescribed rim and inflated at predetermined internal pressure with no load exerted thereon.
FIG. 2 is a side view of the tire shown in FIG. 1.

### DETAILED DESCRIPTION

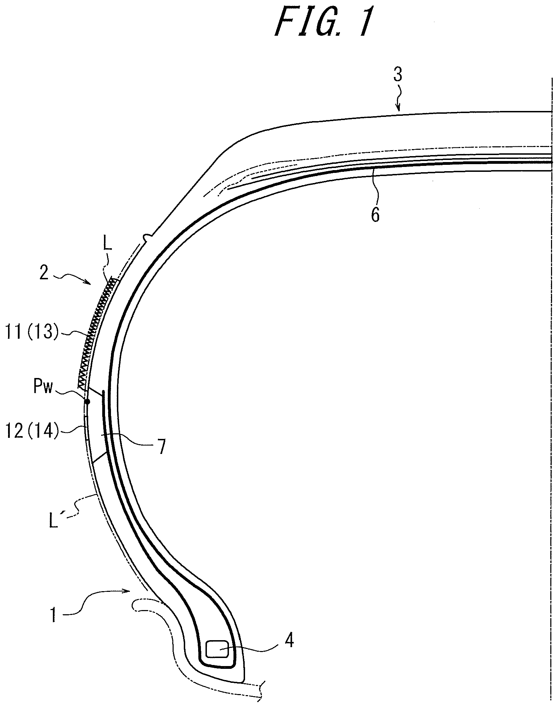

One embodiment of our pneumatic tire will be demonstratively described with reference to the drawings hereinafter.
The following descriptions are provided only for a demonstrative purpose and by no means restrict structures, effects and the like of respective portions of the tire A pneumatic tire exemplarily shown in FIG. 1 has a pair of bead portions 1 each having a bead core 4 embedded therein, a pair of sidewall portions 2 extending from the bead portions 1 toward the outer side in the tire radial direction, and a tread portion 3 extending across the respective sidewall portions 2. The pneumatic tire further has a carcass ply 6 provided to have a toroidal shape between the pair of bead cores 4.

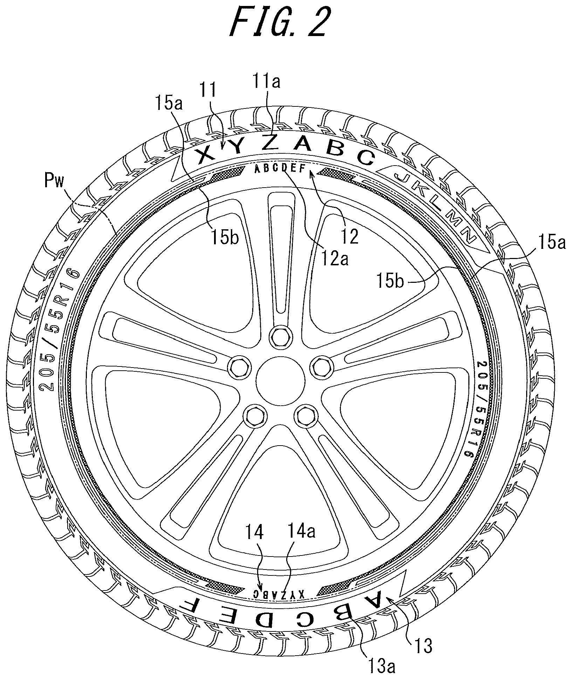

The sidewall portion 2 has a first decorative portion 11 and a second decorative portion 12 provided on the inner side in the tire radial direction of the first decorative portion 11 such that at least a portion in the tire circumferential direction of the second decorative portion 12 overlaps the first decorative portion 11 in the tire radial direction, as shown in FIG. 1 and FIG. 2.
The first decorative portion 11 indicates a first mark 11a "XYZABC" having the base color (value: 10 %, saturation: 0 %, hue: 0°) of the tire by ridges formed to slightly protrude from an outer surface of the sidewall portion. The second decorative portion 12 indicates a second mark 12a "ABCDEF" printed in white (value: 100 %, saturation: 0 %, hue: 0°). The first mark may indicate a brand name and the second mark may indicate a manufacturer's name, for example.
Alternatively, ridges may be formed to surround the first mark 11a which remain flat. Further alternatively, the surroundings of the second mark 12a may be subjected to printing in white, while the second mark 12a itself remains in the base color of the tire. An area of the second mark 12a of the second decorative portion 12 is smaller than an area of the first mark 11a of the first decorative portion 11. An "area of a mark" represents a total area of the entire outer surfaces of character portions when the mark is constituted of characters as shown in FIG. 2 in the present embodiment.

FIG. 1 is a cross sectional view of one half portion of the tire. It is acceptable that the other half portion of the tire lacks any decorative portions and the tire is mounted on a vehicle such that the one half portion of the tire provided with the decorative portions faces the outer side in the width direction of the vehicle. Alternatively, the other half portion of the tire may have decorative portions symmetric to the decorative portions of the one half portion of the tire shown in FIGS. 1 and 2.

A viewer can well recognize both the first mark 11a of the first decorative portion 11 and the second mark 12a of the second decorative portion 12 at a glance because the second decorative portion 12 is provided on the inner side in the tire radial direction of the first decorative portion 11 such that at least a portion in the tire circumferential direction of the second decorative portion 12 overlaps the first decorative portion 11 in the tire radial direction, as described above.

The area of the second mark 12a of the second decorative portion 12 is smaller than the area of the first mark 11a of the first decorative portion 11 because each sidewall portion has only a limited space for accommodating the first mark 11a of the first decorative portion 11 and the second mark 12a of the second decorative portion 12. Decreasing an area of a mark generally deteriorates visibility of the mark. However, good visibility of the second mark 12a having a relatively small area is ensured by increasing the value of the HSV color system of the second mark 12a higher than that of the first mark 11a in the tire of the present embodiment. Good visibility of the first mark 11a is also ensured in spite of relatively low value of the HSV color system thereof because the first mark 11a has a relatively large area.
Accordingly, the pneumatic tire of the present embodiment is capable of making a viewer well recognize the first mark 11a and the second mark 12a thereof at a glance, while ensuring good visibility of each of the first mark 11a and the second mark 12a.

The first decorative portion 11 is formed by ridges and the second decorative portion 12 is formed by printing in the tire of the present embodiment.
In general, visibility of a decoration formed by ridges deteriorates in a dark environment, while visibility of a decoration formed by printing deteriorates in a very bright environment. In this regard, the tire of the present embodiment can ensure good visibility of at least one of the first mark 11a and the second mark 12a even if the environment is dark or very bright.
Further, wear of the first decorative portion 11, which is located at a position on the outer side in the tire radial direction of the tire and likely to have contact with a curb stone or the like when the tire is in use, can be effectively suppressed because the first decorative portion 11 is formed by ridges which are not easily worn out. The second decorative portion 12, which is located at a position on the inner side in the tire radial direction of the tire and not likely to have contact with a curb stone or the like, will not be easily worn out, either, in this regard.

The sidewall portion 2 of the tire of the present embodiment further has: a third decorative portion 13 at a position different in the tire circumferential direction from the first decorative portion 11 and the second decorative portion 12; and a fourth decorative portion 14 provided on the inner side in the tire radial direction of the third decorative portion 13 such that at least a portion in the tire circumferential direction of the fourth decorative portion 14 overlaps the third decorative portion 13 in the tire radial direction.
The third decorative portion 13 indicates another second mark 13a "ABCDEF" having the base color (value: 10 %, saturation: 0 %, hue: 0°) of the tire, by ridges. The fourth decorative portion 14 indicates another first mark 14a "XYZABC" printed in white (value: 100 %, saturation: 0 %, hue: 0°).
An area of the first mark 14a of the fourth decorative portion 14 is smaller than an area of the second mark 13a of the third decorative portion 13.

The third decorative portion 13 is formed by ridges and the fourth decorative portion 14 is formed by printing in the tire of the present embodiment. As a result, good visibility of the second mark 12a, formed by printing, of the second decorative portion 12 and the first mark 14a, formed by printing, of the fourth decorative portion 14 can be ensured in a dark environment; and good visibility of the first mark 11a, formed by ridges, of the first decorative portion 11 and the second mark 13, formed by ridges, of the third decorative portion 13 can be ensured in a very bright environment. Accordingly, a viewer can recognize both the first mark and the second mark even in a dark or very bright environment.

Further, wear of the third decorative portion 13, which is located at a position on the outer side in the tire radial direction of the tire and likely to have contact with a curb stone or the like when the tire is in use, can be effectively suppressed because the third decorative portion 13 is formed by ridges which are not easily worn out. The fourth decorative portion 14, which is located at a position on the inner side in the tire radial direction of the tire and not likely to have contact with a curb stone or the like, will not be easily worn out, either, in this regard.
Yet further, even when the second decorative portion and the fourth decorative portion, each formed by printing, have been worn out, the first mark 11a of the first decorative portion 11 and the second mark 13a of the third decorative portion 13, each formed by ridges, remain without being worn out for a long period and therefore can continue to indicate the first mark and the second mark for the long period.

The second decorative portion 12 and the fourth decorative portion 14, each formed by printing, are provided on the inner side in the tire radial direction than the largest tire width position Pw of the tire of the present embodiment, as shown in FIG. 2. A decorative portion formed by printing is generally susceptible to exfoliation and cracks due to strains. However, such exfoliation and cracks in the printed decorative portion can be effectively suppressed by disposing the decorative portion in a region on the inner side in the tire radial direction than the largest tire width position Pw, which region experiences relatively small strains when the tire is rotated, for example.

An outer contour curve L of the first mark, linking outer surface peaks of the first mark 11a of the first decorative portion 11, i.e. a curve constituting the imaginary outermost surface of the first decorative portion 11 and extending in parallel to an outer base surface of the sidewall portion 2, may protrude on the outer side of the tire than an outer contour curve L' of the second mark, linking outer surface peaks of the second mark 12a of the second decorative portion 12, i.e. a curve constituting the imaginary outermost surface of the second decorative portion 12 and extending in parallel to an outer base surface of the sidewall portion 2. Durability of the second mark 12a improves because the first mark 11a protects the second mark 12a from having contact with the exterior objects in this case.
In this regard, the second mark 13a of the third decorative portion 13 can cause an effect similar to that described above by forming an outer contour curve linking outer surface peaks of the second mark 13a of the third decorative portion 13 to protrude on the outer side of the tire from an outer contour curve linking outer surface peaks of the first mark 14a of the fourth decorative portion 14.

At least one (two in FIG. 2) color line 15a, 15b extending in the tire circumferential direction may be formed by printing, seal pasting or the like on respective sides in the tire circumferential direction of the second decorative portion 12 and/or the fourth decorative portion 14 in the present embodiment, as shown in FIG. 2. An apparent rim diameter of the rim assembled with the tire looks larger than the actual size in this case because the color lines look as if they were a part of the rim.
Further, the second mark 12a of the second decorative portion 12 and/or the first mark 14a of the fourth decorative portion 14 can be made conspicuous by raising the value of the HSV color system of the second mark 12a and/or the first mark 14a than the value of the color lines 15a, 15b in this case. In this regard, visibility of the second mark 12a of the second decorative portion 12 and/or the first mark 14a of the fourth decorative portion 14 can be further improved by setting the value of the HSV color system of the second mark 12a and/or the first mark 14a to be 80 % or higher.

UV curable ink is preferably used in a case where the second decorative portion 12 and/or the fourth decorative portion 14 is formed by printing. Use of UV curable ink can improve workability in this case because the ink is instantly cured by irradiation of UV thereon, whereby exfoliation of resulting decorative portions and ink drop in forming the decorative portions can be both suppressed.

A contamination preventive layer 7 not containing an anti-oxidant is provided on the tire outer surface side of the carcass ply 6 in the tire of the present embodiment, as shown in FIG. 1. The second decorative portion 12 and the fourth decorative portion 14 are adjacent to the contamination preventive layer 7, respectively. This structure can effectively suppress contamination of the second decorative portion 12 and the fourth decorative portion 14 by an anti-oxidant.
Examples of a rubber component of the contamination preventive layer 7 include natural rubber (NR), butyl rubber (IIR), halogenated butyl rubber, isoprene rubber (IR), butadiene rubber (BR), styrene-butadiene rubber (SBR), chloroprene rubber (CR), acrylonitrile-butadiene rubber (NBR), ethylene-propylene-diene terpolymer (EPDM), and the like. These rubbers may be used as the rubber component either solely or in combination of two or more thereof. In a case where ethylene-propylene-diene terpolymer is blended in the contamination preventive rubber, the content of ethylene-propylene-diene terpolymer in the contamination preventive rubber is preferably at least 80 parts by weight with respect to 100 parts by weight of the rubber component of the contamination preventive rubber.
In this connection, presence of butyl-based rubber in at least a portion of the contamination preventive rubber 7 suppresses permeation of an anti-oxidant through the contamination preventive rubber 7, thereby effectively preventing the anti-oxidant contained in other rubber layers from contaminating the decorative portions.
Further, in a case where the contamination preventive rubber 7 contains inorganic clay minerals, the inorganic clay minerals further suppress permeation of an anti-oxidant through the contamination preventive rubber, thereby further enhancing an effect caused by the contamination preventive rubber of preventing the other rubber layers from contaminating the decorative portions.

### Examples

Examples tires 1 to 3 according to our pneumatic tire and Comparative Example tires 1 to 3 as test tires were prepared, respectively.
Example tire 1 has tire size of 205/55R16 and a sidewall thereof is provided with: a first decorative portion indicating a first mark; a second decorative portion indicating a second mark and provided on the inner side in the tire radial direction of the first decorative portion such that at least a portion in the tire circumferential direction of the second decorative portion overlaps the first decorative portion in the tire radial direction (the aforementioned arrangement of the two decorative portions may occasionally be referred to as "the decorative portions are juxtaposed in the tire radial direction" hereinafter); a third decorative portion indicating the second mark and provided at a position different in the tire circumferential direction from the first decorative portion and the second decorative portion; and a fourth decorative portion indicating the first mark and provided on the inner side in the tire radial direction of the third decorative portion such that at least a portion in the tire circumferential direction of the fourth decorative portion overlaps the third decorative portion in the tire radial direction.
The first mark of the first decorative portion and the second mark of the third decorative portion each have, with regard to colors thereof, value of the HSV color system (brightness) L₂: 10 %, saturation: 0 %, and hue: 0°. The second mark of the second decorative portion and the first mark of the fourth decorative portion each have, with regard to colors thereof, value of the HSV color system (brightness) L₁: 10 %, saturation: 0 %, and hue: 0°.
An area S₁ of the second mark of the second decorative portion/the first mark of the fourth decorative portion is smaller than an area S₂ of the first mark of the first decorative portion/the second mark of the third decorative portion.
The first decorative portion and the third decorative portion are formed by ridges and the second decorative portion and the fourth decorative portion are formed by printing. Example tire 2 has the same structure as Example tire 1, except that the second decorative portion and the fourth decorative portion are formed by ridges in the former. Example tire 3 has the same structure as Example tire 1, except that the first decorative portion and the third decorative portion are formed by printing in the former.

Comparative Example tire 1 has the same structure as Example tire 1, except that the first decorative portion and the second decorative portion are juxtaposed in the tire circumferential direction and the third decorative portion and the fourth decorative portion are juxtaposed in the tire circumferential direction, respectively, in the former.
Comparative Example tire 2 has the same structure as Example tire 1, except that the area S₁ of the second mark of the second decorative portion/the first mark of the fourth decorative portion is equal to the area S₂ of the first mark of the first decorative portion/the second mark of the third decorative portion.
Comparative Example tire 3 has the same structure as Example tire 1, except that the area S₁ of the second mark of the second decorative portion/the first mark of the fourth decorative portion is larger than the area S₂ of the first mark of the first decorative portion/the second mark of the third decorative portion.

### <Visibility of marks>

Each of the test tires was assembled with a prescribed rim and visibility of the marks thereof was investigated. Specifically, 20 viewers observed each of the test tires thus prepared in a cloudy weather condition and a fine weather condition, respectively, and a questionnaire survey was conducted for these viewers regarding whether or not both the first mark and the second mark of the tire could be recognized. Definitions of "cloudy weather" and "fine weather" were based on the relevant definitions made by Japan Meteorological Agency.

The results are shown in Table 1. With regard to the evaluation criteria of visibility, the number of the viewers who answered that both the first mark and the second mark were successfully recognized was counted and the grade A represents the number ≥ 18, the grade B represents 10≤ the number ≤ 17, and the grade C represents the number ≤ 9.

**[Table 1]**

| | Comp. Example 1 | Comp. Example 2 | Comp. Example 3 | Example 1 | Example 2 | Example 3 |
|---|---|---|---|---|---|---|
| Disposition of first mark and second mark | Juxtaposed in tire circumferential direction | Juxtaposed in tire radial direction | | | | |
| Relationship between S₁ and S₂ | S₁ < S₂ | S₁ = S₂ | S₁ > S₂ | S₁ < S₂ | S₁ < S₂ | S₁ < S₂ |
| Relationship between L₁ and L₂ | L₁ > L₂ | L₁ > L₂ | L₁ > L₂ | L₁ > L₂ | Lᵢ₁> L₂ | L₁ > L₂ |
| Method for forming first and third decorative portions | Ridge | Ridge | Ridge | Ridge | Ridge | Printing |
| Method for forming second and fourth decorative portions | Printing | Printing | Printing | Printing | Ridge | Printing |
| Visibility (in cloudy weather condition) | C | B | B | A | B | A |
| Visibility (in fine weather condition) | C | B | B | A | A | B |

### REFERENCE SIGNS LIST

- 1:: Bead portion
- 2:: Sidewall portion
- 3:: Tread portion
- 4:: Bead core
- 6:: Carcass ply
- 7:: Contamination preventive rubber layer
- 11:: First decorative portion
- 11a:: First mark
- 12:: Second decorative portion
- 12a:: Second mark
- 13:: Third decorative portion
- 13a:: Second mark
- 14:: Fourth decorative portion
- 14a:: First mark
- 15a, 15b:: Color line
- Pw:: The largest tire width position

## Claims

1. A pneumatic tire including a pair of bead portions (1) each having a bead core (4) embedded therein, a pair of sidewall portions (2) extending from the bead portions (1) toward the outer side in the tire radial direction, and a tread portion (3) extending across the respective sidewall portions (2), the sidewall portion (2) comprising:
a first decorative portion (11) indicating a first mark (11a); and
a second decorative portion (12) indicating a second mark (12a) and provided on the inner side in the tire radial direction of the first decorative portion (11) such that at least a portion in the tire circumferential direction of the second decorative portion (12) overlaps the first decorative portion (11) in the tire radial direction, **characterized in that**:
a value of the HSV color system of the second mark (12a) of the second decorative portion (12) is higher than the value of the first mark (11a) of the first decorative portion (11), and
an area of the second mark (12a) of the second decorative portion (12) is smaller than an area of the first mark (11a) of the first decorative portion (11).

2. The pneumatic tire of claim 1, wherein the first decorative portion (11) is formed by ridges and the second decorative portion (12) is formed by printing.

3. The pneumatic tire of claim 1 or 2, wherein the sidewall portion (2) further comprising:
a third decorative portion (13) indicating the second mark (13a) and provided at a position different in the tire circumferential direction from the first decorative portion (11) and the second decorative portion (12); and
a fourth decorative portion (14) indicating the first mark (14a) and provided on the inner side in the tire radial direction of the third decorative portion (13) such that at least a portion in the tire circumferential direction of the fourth decorative portion (14) overlaps the third decorative portion (13) in the tire radial direction,
wherein the value of the HSV color system of the first mark (14a) of the fourth decorative portion (14) is higher than the value of the second mark (13a) of the third decorative portion (13), and
an area of the first mark (14a) of the fourth decorative portion (14) is smaller than an area of the second mark (13a) of the third decorative portion (13).

4. The pneumatic tire of claim 3, wherein the second decorative portion (12) and the fourth decorative portion (14) are provided on the inner side in the tire radial direction than the largest tire width position (Pw) of the tire.

5. The pneumatic tire of claim 2, wherein an outer contour curve (L) of the first mark (11a), linking outer surface peaks of the first mark (11a), protrudes on the outer side of the tire than an outer contour curve (L') of the second mark (12a), linking outer surface peaks of the second mark (12a).

## Patentansprüche

1. Luftreifen, der ein Paar von Wulstabschnitten (1), die jeweils einen in denselben eingebetteten Wulstkern (4) haben, ein Paar von Seitenwandabschnitten (2), die sich von den Wulstabschnitten (1) zu der äußeren Seite hin in der Reifenradialrichtung erstrecken, und einen Laufflächenabschnitt (3), der sich quer über die jeweiligen Seitenwandabschnitte (2) erstreckt, einschließt, wobei der Seitenwandabschnitt (2) Folgendes umfasst:
einen ersten verzierenden Abschnitt (11), der eine erste Markierung (11a) anzeigt, und
einen zweiten verzierenden Abschnitt (12), der eine zweite Markierung (12a) anzeigt und auf der in der Reifenradialrichtung inneren Seite des ersten verzierenden Abschnitts (11) derart bereitgestellt wird, dass wenigstens ein Abschnitt des zweiten verzierenden Abschnitts (12) in der Reifenumfangsrichtung den ersten verzierenden Abschnitt (11) in der Reifenradialrichtung überlappt, **dadurch gekennzeichnet, dass**:
ein Wert des HSV-Farbsystems der zweiten Markierung (12a) des zweiten verzierenden Abschnitts (12) höher ist als der Wert der ersten Markierung (11a) des ersten verzierenden Abschnitts (11) und
eine Fläche der zweiten Markierung (12a) des zweiten verzierenden Abschnitts (12) kleiner ist als eine Fläche der ersten Markierung (11a) des ersten verzierenden Abschnitts (11).

2. Luftreifen nach Anspruch 1, wobei der erste verzierende Abschnitt (11) durch Erhöhungen geformt ist und der zweite verzierende Abschnitt (12) durch Drucken geformt ist.

3. Luftreifen nach Anspruch 1 oder 2, wobei der Seitenwandabschnitt (2) ferner Folgendes umfasst:
einen dritten verzierenden Abschnitt (13), der die zweite Markierung (13a) anzeigt und an einer in der Reifenumfangsrichtung von dem ersten verzierenden Abschnitt (11) und dem zweiten verzierenden Abschnitt (12) verschiedenen Position bereitgestellt wird, und
einen vierten verzierenden Abschnitt (14), der die erste Markierung (14a) anzeigt und auf der in der Reifenradialrichtung inneren Seite des dritten verzierenden Abschnitts (13) derart bereitgestellt wird, dass wenigstens ein Abschnitt des vierten verzierenden Abschnitts (14) in der Reifenumfangsrichtung den dritten verzierenden Abschnitt (13) in der Reifenradialrichtung überlappt,
wobei der Wert des HSV-Farbsystems der ersten Markierung (14a) des vierten verzierenden Abschnitts (14) höher ist als der Wert der zweiten Markierung (13a) des dritten verzierenden Abschnitts (13) und
eine Fläche der ersten Markierung (14a) des vierten verzierenden Abschnitts (14) kleiner ist als eine Fläche der zweiten Markierung (13a) des dritten verzierenden Abschnitts (13).

4. Luftreifen nach Anspruch 3, wobei der zweite verzierende Abschnitt (12) und der vierte verzierende Abschnitt (14) auf der in der Reifenradialrichtung weiter inneren Seite als die Position der größten Reifenbreite (Pw) des Reifens bereitgestellt werden.

5. Luftreifen nach Anspruch 2, wobei eine äußere Umrisskrümmung (L) der ersten Markierung (11a), die äußere Oberflächenspitzen der ersten Markierung (11a) verbinden, auf der weiter äußeren Seite des Reifens vorspringt als eine äußere Umrisskrümmung (L') der zweiten Markierung (12a), die äußere Oberflächenspitzen der zweiten Markierung (12a) verbindet.

## Revendications

1. Pneumatique comprenant une paire de parties formant talon (1) ayant chacune une tringle (4) incorporée dedans, une paire de parties formant paroi latérale (2) s'étendant à partir des parties formant talon (1) en direction du côté externe dans la direction radiale du pneu, et une partie de bande de roulement (3) s'étendant à travers les parties formant paroi latérale (2) respectives, la partie formant paroi latérale (2) comprenant :
une première partie décorative (11) indiquant une première marque (11a) ; et
une deuxième partie décorative (12) indiquant une deuxième marque (12a) et prévue sur le côté interne dans la direction radiale du pneu de la première partie décorative (11) de telle sorte qu'au moins une partie dans la direction circonférentielle du pneu de la deuxième partie décorative (12) chevauche la première partie décorative (11) dans la direction radiale du pneu, **caractérisé en ce que** :
une valeur du système de couleurs HSV de la deuxième marque (12a) de la deuxième partie décorative (12) est supérieure à la valeur de la première marque (11a) de la première partie décorative (11), et
une zone de la deuxième marque (12a) de la deuxième partie décorative (12) est plus petite qu'une zone de la première marque (11a) de la première partie décorative (11).

2. Pneumatique selon la revendication 1, dans lequel la première partie décorative (11) est formée par des crêtes et la deuxième partie décorative (12) est formée par impression.

3. Pneumatique selon la revendication 1 ou 2, dans lequel la partie formant paroi latérale (2) comprend en outre :
une troisième partie décorative (13) indiquant la deuxième marque (13a) et prévue au niveau d'une position différente dans la direction circonférentielle du pneu par rapport à la première partie décorative (11) et à la deuxième partie décorative (12) ; et
une quatrième partie décorative (14) indiquant la première marque (14a) et prévue sur le côté interne dans la direction radiale du pneu de la troisième partie décorative (13) de telle sorte qu'au moins une partie dans la direction circonférentielle du pneu de la quatrième partie décorative (14) chevauche la troisième partie décorative (13) dans la direction radiale du pneu,
dans lequel la valeur du système de couleurs HSV de la première marque (14a) de la quatrième partie décorative (14) est plus grande que la valeur de la deuxième marque (13a) de la troisième partie décorative (13), et
une zone de la première marque (14a) de la quatrième partie décorative (14) est plus petite qu'une zone de la deuxième marque (13a) de la troisième partie décorative (13).

4. Pneumatique selon la revendication 3, dans lequel la deuxième partie décorative (12) et la quatrième partie décorative (14) sont prévues sur le côté interne dans la direction radiale du pneu plutôt que dans la position de la plus grande largeur du pneu (Pw) du pneu.

5. Pneumatique selon la revendication 2, dans lequel une courbe de contour externe (L) de la première marque (11a), reliant des pics de surface externe de la première marque (11a), fait saillie sur le côté externe du pneu plutôt qu'une courbe de contour externe (L') de la deuxième marque (12a), reliant des pics de surface externe de la deuxième marque (12a).
